## Europäisches Patentamt

## European Patent Office

## Office européen des brevets

(19)

(11) Publication number: **0 023 684**
**B2**

(12) # NEW EUROPEAN PATENT SPECIFICATION

(45) Date of publication of the new patent specification:
14.06.89

(51) Int. Cl.⁴: **B 01 J 2/16**, B 01 J 8/24 //
C05C9/00

(21) Application number: **80104400.9**

(22) Date of filing: **25.07.80**

(54) Granule producing apparatus.

(30) Priority: **06.08.79 JP 100131/79**

(43) Date of publication of application:
**11.02.81 Bulletin 81/6**

(45) Publication of the grant of the patent:
**30.06.82 Bulletin 82/26**

(45) Mention of the opposition decision:
**14.06.89 Bulletin 89/24**

(84) Designated Contracting States:
**DE FR GB IT NL**

(56) References cited:
FR-A- 2 171 945
GB-A- 915 412
GB-A- 977 664
US-A- 3 241 520
US-A- 3 940 514

K. B. Mathur and N. Epstein "Spouted Beds", Academic
Press (1974), pp 263, 264
T. F. Davidson, D. Harrison "Fluidisation", Academic
Press (1971), pp 712,716

The file contains technical information submitted after
the application was filed and not included in this
specification

(73) Proprietor: **TOYO ENGINEERING CORPORATION, 2-5,
Kasumigaseki 3-chome, Chiyoda-ku, Tokyo 100 (JP)**
Proprietor: **MITSUI TOATSU CHEMICALS,
INCORPORATED, 2-5 Kasumigaseki 3-chome,
Chiyoda-Ku Tokyo 100 (JP)**
Proprietor: **Tsukishima Kikai Co. Ltd., 2-17-15, Tsukuda,
Chuo-ku Tokyo (JP)**

(72) Inventor: **Nio, Susumu, 3-49-11, Denenchofu Ota-ku,
Tokyo (JP)**
Inventor: **Hirayama, Hiroshi, 2939, Komurocho
Funabashi-shi, Chiba (JP)**
Inventor: **Honda, Tetsuzo, 2-32-13, Natsumi-cho,
Funabashi-shi Chiba (JP)**
Inventor: **Nagahama, Takashi, 266-9, Takashi,
Mobara-shi Chiba (JP)**
Inventor: **Naruo, Masaki, 2100, Togo Mobara-shi, Chiba
(JP)**
Inventor: **Yoshida, Teruo, 30-13, Midoricho Mobara-shi,
Chiba (JP)**
Inventor: **Shiotsu, Gisaburo, 403,Mizonoguchi,
Kawasaki-shi Kanagawa (JP)**
Inventor: **Satoh, Yoshinori, 4-24-4, Takanedai,
Funabashi-shi Chiba (JP)**
Inventor: **Toyama, Kenji, 506-35, Michinobe Kamaya-shi,
Chiba (JP)**

(74) Representative: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 58, D-8000 München 22 (DE)**

EP 0 023 684 B2

ACTORUM AG

## Description

This invention relates to a granule producing apparatus of the type as indicated in the precharacterising clause of the patent claim. An apparatus of this type is shown in GB-A 915 412.

This prior art apparatus is used for the mixing of materials and if it is desired to mix a solid material with a liquid, a suitable liquid may be entrained into the air current which conveys the solid material particles upwardly.

The conventional apparatus comprises a mixing container having a porous bottom through which a fluidizing gas current can be introduced into said mixing container and one or more inlet means penetrating said porous bottom for introducing a conveying gas current, the top of the mixing container communicating with an expansion chamber.

The lower portion of the mixing container is conically shaped, the lowest part thereof forming an outlet for emptying the mixing container, said conveying gas inlet means being arranged in a circular configuration around said outlet. The porous floor extends in a direction parallel to the tapered bottom end portion, whereby the fluidizing gas can enter the mixing container. It should be noted that in the conventional multi-conveying gas inlet means apparatus the gas tubes protrude above the surface of the porous floor.

The conventional apparatus reflecting the state of the art of 1960 is not suitable for satisfying the growing needs of various fields of industry for granule processing apparatuses which are able to process large amounts of granules by enlarging same by coating with sprayed liquid of the same substance or different substance from that of the granules.

It is, therefore, the object of the present invention to improve an apparatus of the type as indicated in the preamble portion of claim 1 such that large amounts of granules can be treated with high efficiency. In particular it is desired to provide a device which is easy to operate and stable in operation during the process of enlarging granules or coating granules with the same or different materials than that of the granules.

The object of the present invention is achieved according to the characterising clause of the patent claim in that each cylindrical pipe is connected to the lower end of an inverse truncated cone forming a funnel; said funnels being arranged in parallel on a plane; said upward enlarged cones opening into the interior of the container with their upper ends merging with the porous floor; the means for supplying jet streams of air being a jet stream supply chamber provided below the fluidized bed air stream supply chamber and each of the means for supplying granules into the fluidized bed and the means for discharging the treated granules out of the fluidized bed space being fitted to the side wall of the container.

From US-A 3 940 514 there is known an apparatus for coating electrostatographic carrier particles showing a combined use of at least one fluidizing bed and one spouted bed in order to effect the coating of the particles.

From J.F. Davidson, D. Harrison, "FLUIDIZATION", ACADEMIC PRESS (1971), pages 712 and 716, there is known a cylindrical spouting vessel having a short conical base tapering down to the inlet opening of the spouting gas.

The invention will be further explained in conjunction with the following description and drawings illustrating the development of the inventive apparatus as well as a preferred embodiment thereof, and wherein:

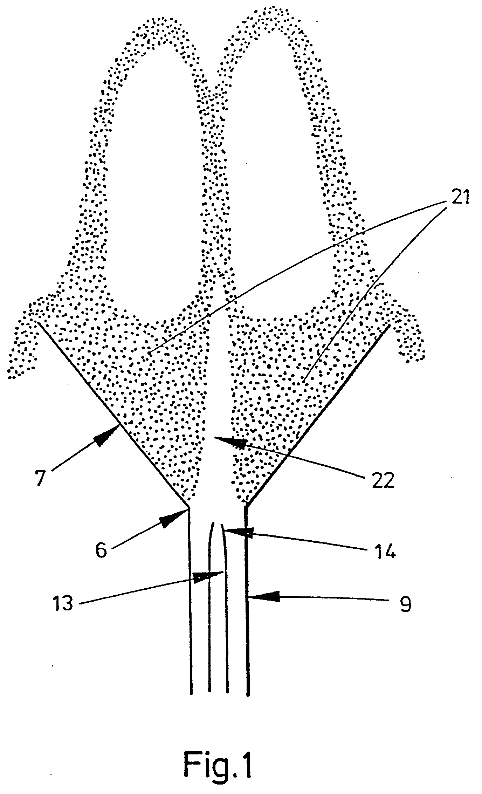

Fig. 1 is a vertical cross-sectional view of a funnel showing a jet stream flowing upwardly through the inverse truncated cone of the funnel;

Fig. 2 is a vertical cross-sectional view showing a plurality of funnels contained in one chamber;

Fig. 3 is a vertical cross-sectional view showing a plurality of funnels located close together in one chamber; and

Fig. 4 is a cross-sectional view of the device of this invention showing the operating principle of this invention

Fig. 5 is a cross-sectional view cut along the line A–A appearing in Fig. 4.

The upward stream of sprayed liquid of a certain substance runs through the center of a funnel containing the grains to be treated, so that the sprayed substance is applied to the surfaces of the granules during the short period of time that these granules are carried up by the stream of sprayed particles. The granules are disturbed by the stream and they are repeatedly subjected to the stream of sprayed particles until the granules are coated to a desired thickness. The sprayed substance adhering to the surface of the grains rapidly solidifies as it cools or dries in a short period of time that the grains are carried up by the stream. Each grain is required to be fed more than once to the jet stream 22 where the small particles of applied substance impinge against the grains. The larger the diameter of the grains and the larger the amount of particles to be applied to the grains, the greater must be the number of times that each grain is fed to the jet stream.

The Jet stream 22 penetrates upwardly the central portion of the layer of the grains 21. It is desirable that the grains at the lower end of the funnel or near the base of the jet stream be smoothly fed into the jet stream so that as the grains around the base of the jet stream are carried up with the stream and fall onto the upper surface of the grain layer, the grains in the lower portion of the layer successively and smoothly move down toward the jet stream. This ensures smooth circulation of the grains. This process must be repeated a number of times, as already mentioned. It is also necessary that all the grains be processed as nearly the same number of times as possible.

For the granules to be successively fed into the jet stream in an orderly manner, the container 7 containing the granules to be treated has a shape of a reversed truncated cone, along the central vertical axis of which the jet stream of air flows upward through the funnel. The pressure of the air stream rapidly increases, as the depth of the grain layer increases, and when the depth of the layer reaches a certain limit, the continuous flow of air steam is blocked by the thick layer of grains.

Due to deterioration of the jet stream stability, there is a limit on the size of the funnel although it varies according to the characteristic of the grains to be treated. Thus, in order to increase the amount of granules that can be treated, there is no alternative but to increase the number of funnels.

But, if the number of funnels is increased to enlarge the capacity of the device, the number of heat exchangers, classifiers and other equipment as well as piping will also increase pushing up the equipment cost and operating cost.

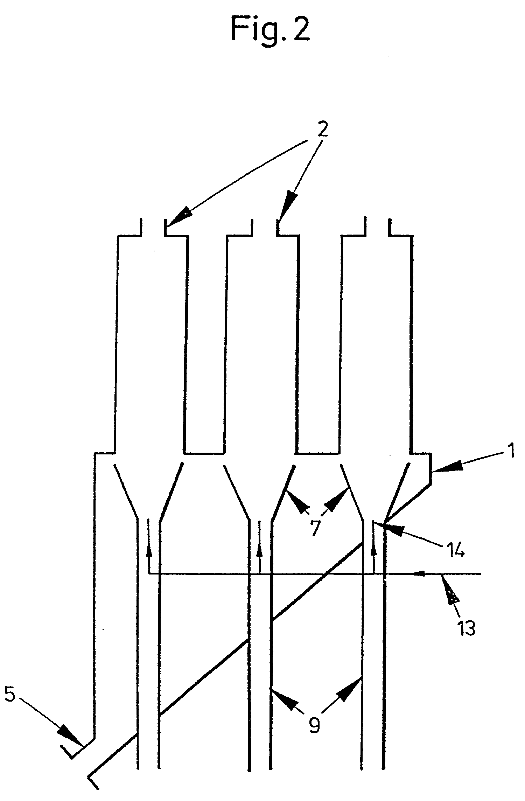

Figure 2 shows a device in which a number of funnels are provided in a single chamber. This type of device has the disadvantage that the system for adjusting the amount of supply of grains, air stream and sprayed particles becomes complex.

A fine adjustment is required to maintain the stable processing of grains even in a single funnel. Thus, it is more difficult to control the grain processing in a plurality of funnels at one time by controlling three supply systems – grain supply system, air stream supply system and sprayed particle supply system.

If, instead, each funnel is provided with control equipment for each supply system, stable processing of grains may not be obtained because the amount of grains contained in each funnel cannot be measured precisely due to rapid movement of grains.

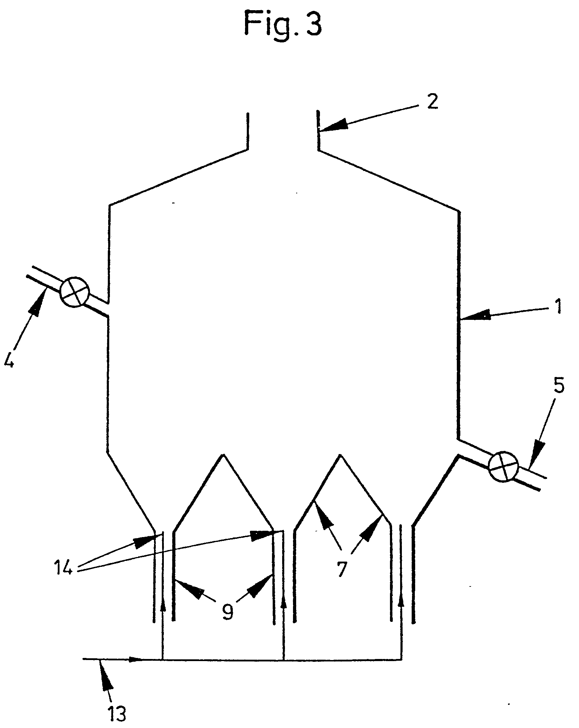

To avoid the difficulty in controlling the supply systems, encountered in the conventional device in which a number of funnels are contained in one chamber, and to improve the free movement of grains from one funnel to other funnels, we have located the funnels close together, as shown in Figure 3. We have conducted experiments with this device and found that there are differences in the amount of grain among the funnels and that the jet stream is very unstable in those funnels near the grain supply end. The provision of another supply system to distribute the grains uniformly among the funnels will make the adjusting system complicated. Investigating the results of the experiments, we have found it most effective in distributing the grains among the funnels to space the funnels a certain distance from one another and to form a fluidized bed of the grains between the funnels so that the fluidized bed works as a passage for the grains to move freely. We have confirmed with the experiments that this device with the fluidized bed works effectively.

This fluidized bed which provides a good distribution passage for the grains not only makes it possible to arrange a number of funnels in parallel on a plane but it also proved useful in drying, cooling and heating the grains over the wide range of conditions.

Unlike ordinary distribution passages, this fluidized bed allows the grains free movement in all directions, which explains why the fluidized bed works as a good distribution passage for the grains.

The granule producing apparatus according to this invention comprises: a container 1; an exhaust means 2, 3 provided to the top of the container; a space in the upper interior of the container 1 for separating solid material from gases; a space for a fluidized bed in the lower interior of the container 1; a porous floor 8 immediately below the fluidized bed space for defining the lower limit of the fluidized bed; an air chamber 10 beneath the porous floor 8 for supplying air streams to form the fluidized bed; a means 12 for supplying jet stream of air, provided below the fluidized bed air stream supply chamber; a plurality of parallelly arranged funnels 6, said funnels each consisting of an inverse truncated cone 7 and a cylindrical pipe 9 connected to the lower end of the cone 7, said upwardly enlarged cone opens into the interior of the container with its upper end merging with the porous floor, each said cylindrical pipe 9 having its lower end connected to the jet stream supply means 12; a means 14 disposed within the upper portion of the cylindrical pipe 9 of each funnel 6 for spraying liquid under pressure into the jet air stream so that the sprayed liquid adheres to granules and solidifies as it dries; a means 4 fitted to the side wall of the container 1 for supplying granules into the fluidized bed space; and means fitted to the side wall of the container for discharging the treated granules out of the fluidized bed space.

We will now explain the device of this invention with reference to the accompanying drawings by taking up an example case where the device is applied to forming large granules of urea.

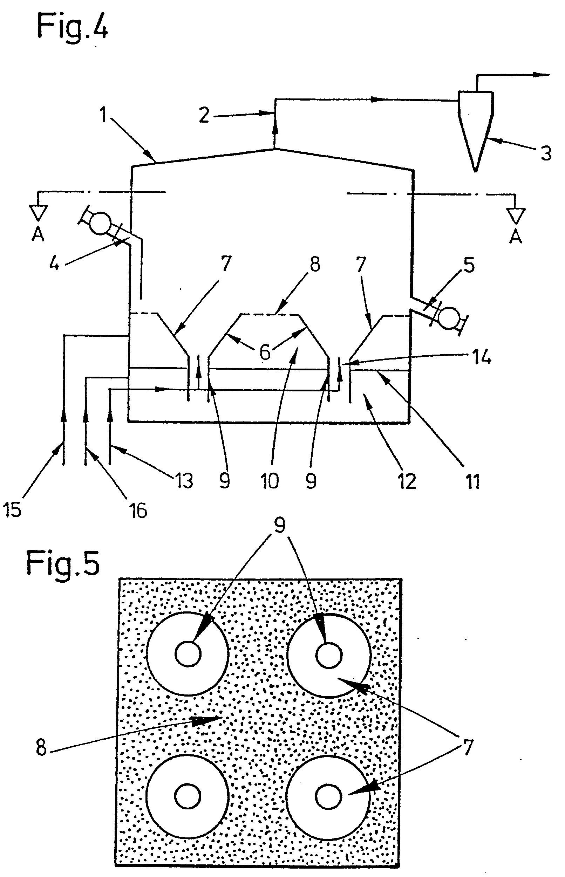

Figure 4 is a vertical cross section of the apparatus of this invention, showing the operating principle. The container 1 is equipped at the top with the exhaust pipe 2 to which an arrestor 3 is attached. The container 1 also has a granule supply pipe 4 and a treated granule discharge pipe 5, fitted to the upper middle portion and the lower middle portion of the side wall, respectively.

The number of the exhaust pipes 2, supply pipes 4 and discharge pipes 5 may be increased as required according to the capacity of the device. The supply pipe 4 may be mounted, as shown, to the upper middle portion of the side wall of the container.

A plurality of funnels 6 are installed in one lower portion of the container 1 and the bottom portion of the inverse truncated cone 7 of each of the funnels 6 in connected to a pipe 9 for directing the air steam upward.

An air stream supply chamber 10 is formed beneath the porous floor 8, and under the lower floor 11 is provided a jet steam supply chamber 12 into which the lower ends of the pipes 9 of the funnels open.

The pipe 13 for the supply of the molten urea is passed through the lower portion of the side wall into the container 1 where it is branched and connected to each spray nozzle 14 located in the upper central portion of the tubes 9.

Air is supplied to the air stream supply chamber 10 and the jet stream supply chamber 12 through the pipes 15, 16 which are connected to a blower (not shown).

While in Figure 4 the upper edge of the funnels 6 and the porous floor 8 are shown flush with each other, the funnels 6 may be so arranged that there are slight differences in heigh between their upper edges to optimize the movement and distribution of the granules according to the use of the apparatus. It is also possible to give slight inclination to the porous floor 8.

We will explain how a device of this invention functions in producing granules of urea.

Air at the temperature of 20°C is supplied at the rate of 16,700 Nm³/h to the jet stream supply chamber 12 whose pressure is maintained at $9.81 \times 10^3$ Pa. The same air is also supplied at the rate of 24,700 Nm³/h to the air stream supply chamber 10 in which the pressure is maintained at $4.90 \times 10^3$ Pa.

The pipe 13 supplies molten urea of 138°C at the rate of 8.4 t/h to the nozzles 14 from which it is sprayed into the air stream flowing upward.

Grains of urea less than 3 mm in diameter are supplied into the container at the rate of 8.4 t/h.

The liquified urea is sprayed from the nozzle 14 by the action of the jet stream of air, producing the steam of atomized urea flowing upward through the inverse truncated cones 7. This causes grains in the funnels 6 to circulate along the streams. The grains are successively led to the bottoms of the funnels and into the jet streams to combine with small particles of urea prayed from the nozzles. As a result of this process the grains of urea become greater and greater. The grains of urea supplied from the supply pipe 4 form a fluidized bed of grains floating about 100 mm above the porous floor 8 and the grains of the fluid bed are evenly distributed among the inverse truncated cones 7. The grains become large as they are repeatedly circulated through the streams of the sprayed urea. These enlarged grains are agitated by the air from the porous floor to move on the fluidized bed, colliding against one another.

The average diameter of the grains thus obtained in the container 1 is greater than that of the grains being thrown in from the supply pipe 4.

The grains of urea are discharged continuously from the discharge pipe 5 at the same rate that the urea is being supplied from the supply pipe 4 and the liquified urea supply pipe 13.

The truncated grains thus discharged are classified according to their diameters to obtain the grains within the desired range of diameter.

The granules of urea that are out of the range of the desired diameter or caught by the arrestor are recirculated to the device through the supply pipe 4 for further treatment.

In this case, the temperature of the treated granules when discharged from the discharge pipe 5 is about 62°C, so further cooling is not needed. The exhaust pipe 2 releases the exhaust gases at 79°C.

Since Figure 4 is a vertical cross section, only one row of funnels are shown. The diameter of the product granules depends mainly on the diameter and the amount of the granules supplied from the pipe 4.

The advantages of the device of this invention may be summarized as follows.

First, the production capacity can be increased with minimum additional facility cost.

Second, since the distribution and collection of the granules are carried out smoothly, the granules in the funnels can be treated uniformly thereby improving the productivity.

Third, the fluidized bed can perform the functions of cooling, heating, drying or humidifying and other preliminary and follow-up treatments so that no additional equipment is required for these functions.

Fourth, by reducing the depth of the inverse truncated cones, it is possible to shorten the time during which the granules stay in the funnels and to elongate the time during which they stay moving in the fluidized bed in which they are throughly mixed by the stream of air. Hence, it is possible to treat the granules uniformly by adjusting these times. Furthermore, the pressure of the jet stream of air is adjustable.

Fifth, an overall height of the device is small. This enables the associated equipment to be installed at relatively low location, which in turn reduces the construction as well as operation costs.

## Claim

A granule producing apparatus comprising: a container (1); an exhaust means (2, 3) provided to the top of the container; a space in the upper interior of the container (1) for separating solid material from gases; a space for a fluidized bed in the lower interior of the container (1); a porous floor (8) immediately below the fluidized bed space for defining the lower limit of the fluidized bed; an air chamber (10) beneath the porous floor (8) for supplying air streams to form the fluidized bed; a means for supplying jet stream of air, a plurality of parallel arranged cylindrical pipes (9) arranged a certain distance from one another; a fluidized bed being formed between the pipes; each cylindrical pipe (9) having its lower end connected to the jet stream supply means; a means (14) disposed within the upper portion of the cylindrical pipe (9) of each funnel (6) for spraying liquid under pressure into the jet air stream so that the sprayed liquid adheres to granules and solidifies as it dries; a means for supplying granules into the fluidized bed; and a means for discharging the treated granules out of the fluidized bed space;

characterised in each cylindrical pipe (9) being connected to the lower end of an inverse truncated cone (7) forming a funnel (6);

said funnels being arranged in parallel on a plane; said upwardly enlarged cones opening into the interior of the container (1) with their upper ends merging with the porous floor (8);

the means for supplying jet stream of air being a jet stream supply chamber (12) provided below the fluidized bed air steam supply chamber;

each of the means (4) for supplying granules into the fluidized bed and the means (5) for discharging the treated granules out of the fluidized bed space being fitted to the side wall of the container.

## Patentanspruch

Vorrichtung zum Herstellen von Granulat, mit einem Behälter (1), einer am oberen Teil des Behälters angeordneten Absaugeinrichtung (2, 3), einem Raum im oberen Abschnitt des Behälterinneren zum Trennen von Feststoffmaterial von Gasen, einem Raum für ein Fliessbett im unteren Abschnitt des Behälterinneren, einem porösen Boden (8) unmittelbar unterhalb des Fliessbettraums zum Definieren der unteren Grenze des Fliessbetts, einer Luftkammer (10) unterhalb des porösen Bodens (8) für die Zufuhr von Luftströmen zur Ausbildung des Fliessbetts, einer Einrichtung zum Zuführen eines Düsen-Luftstroms, einer Anzahl von parallel zueinander angeordneten zylindrischen Rohren (9), welche in einem gewissen Abstand voneinander angeordnet sind, einem zwischen den Rohren ausgebildeten Fliessbett, wobei jedes zylindrische Rohr (9) an seinem unteren Ende mit der Einrichtung zum Zuführen des Düsenstroms verbunden ist, jeweils einer im oberen Teil des zylindrischen Rohrs (9) jedes Trichters (6) angeordneten Einrichtung (14) zum Einsprühen von Flüssigkeit unter Druck in den Düsen-Luftstrom, so dass die eingesprühte Flüssigkeit an dem Granulat haftet und beim Trocknen erstarrt, einer Einrichtung für den Eintrag von Granulat in das Fliessbett und einer Einrichtung für den Austrag des behandelten Granulats aus dem Fliessbettraum,

dadurch gekennzeichnet, dass jedes zylindrische Rohr (9) mit dem unteren Ende eines einen Trichter (6) bildenden, überkopf stehenden Kegelstumpfs (7) verbunden ist,

dass die Trichter parallel zueinander auf einer Ebene angeordnet sind,

dass die sich aufwärts erweiternden Kegel in den Innenraum des Behälters (1) münden, wobei ihre oberen Enden in den porösen Boden (8) übergehen,

dass die Einrichtung für die Zufuhr eines Düsen-Luftstroms eine Düsenstrom-Zufuhrkammer (12) ist, welche unterhalb der Kammer für die Zufuhr eines Luftstroms für die Ausbildung des Fliessbetts angeordnet ist,

und dass die Einrichtung (4) für den Eintrag von Granulat in das Fliessbett sowie die Einrichtung (5) für den Austrag des behandelten Granulats aus dem Fliessbettraum jeweils an der Seitenwand des Behälters angeordnet sind.

## Revendication

Appareil de production de granules, comprenant une enveloppe (1); un dispositif d'évacuation (2, 3) prévu à la partie supérieure de cette enveloppe; un espace de séparation de matières solides et de gaz prévu à la partie supérieure de l'intérieur de l'enveloppe (1); un espace pour lit fluidisé prévu dans la partie inférieure de l'intérieur de l'enveloppe (1); un plancher poreux (8) situé immédiatement au-dessous de l'espace du lit fluidisé et définissant la limite inférieure de ce lit fluidisé; une chambre à air (10) située au-dessous du plancher poreux (8) et destinée à fournir des courants d'air pour former le lit fluidisé; un dispositif (12) d'amenée de jets d'air, une pluralité de tuyaux cylindriques (9) disposés parallèlement les uns par rapport aux autres et à une certaine distance les uns des autres; un lit fluidisé étant formé entre les tuyaux; chaque tuyau cylindrique (9) ayant son extrémité inférieure reliée au dispositif (12) d'amenée de jets d'air; un dispositif (14) prévu dans la partie supérieure du tuyau cylindrique (9) de chaque trémie (6) afin de pulvériser du liquide sous pression dans le jet d'air de manière que le liquide pulvérisé adhère aux granules et solidifie en séchant; un dispositif (4) destiné à amener les granules dans le lit fluidisé; et un dispositif (5) destiné à l'évacuation des granules traitées hors de l'espace du lit fluidisé, caractérisé en ce que chaque tuyau cylindrique (9) est relié à l'extrémité inférieure d'un tronc de cône inversé (7) formant une trémie (6); lesdites trémies étant disposées parallèlement dans un plan; lesdits cônes élargis vers le haut débouchant dans l'intérieur de l'enveloppe (1) avec l'extrémité supérieure raccordée au plancher poreux (8); le dispositif d'amenée de jets d'air étant une chambre d'amenée de jets d'air (12) disposée en-dessous de la chambre d'amenée de courants d'air au lit fluidisé; chaque dispositif (4) pour l'amenée de granules dans le lit fluidisé et le dispositif (5) pour l'évacuation des granules traitées hors de l'espace du lit fluidisé étant solidaire de la paroi latérale de l'enveloppe.

Fig.1

# Fig. 2

Fig. 3

## Fig.4

## Fig.5